# EUROPEAN PATENT APPLICATION

(11) **EP 4 494 785 A1**
(43) Date of publication of application: **22.01.2025**
(21) Application number: 24186457.8
(22) Date of filing: 04.07.2024
(51) Int. Cl.: B22F 10/25, B22F 7/06, B22F 12/10, B22F 12/90, B23K 26/342, B23K 26/60, B33Y 10/00, B33Y 30/00, B22F 7/08

(54) **INDUCTION HEATING OF A COMPONENT DURING DIRECT ENERGY DEPOSITION REPAIR**

(30) Priority: 12.07.2023 US 202318351102
(71) Applicant: RTX Corporation, Farmington, CT 06032 (US)
(72) Inventor: BREITZMANN, Peter John, Aldie (US)
(74) Representative: Dehns

(57) **Abstract**

A method for repairing a component (302) without further damaging the component (302) is provided. A magnetic field is applied to the component (302) via an induction coil (304) thereby causing a temperature of the component (302) to increase. Responsive to the component (302) reaching a desired temperature, the component (302) is repaired via a direct energy deposition process.

## Description

### TECHNICAL FIELD

The present disclosure relates generally to aerospace component repair and, more particularly, to induction heating of a component during direct energy deposition repair.

### BACKGROUND

Directed energy deposition (DED), which is an additive manufacturing process in which focused thermal energy is used to fuse materials by melting as they are being deposited, functions by guiding energy, which acts as a laser that focuses on a specific area where the metal powders or wire are heated up and deposited after melting. Accordingly, DED in relation to additive manufacturing technology utilizes powder or wire feedstocks. This DED is a process utilized for the repair of aerospace components.

### SUMMARY

A method for repairing a component without further damaging the component is disclosed herein. A magnetic field is applied to the component via an induction coil thereby causing a temperature of the component to increase. Responsive to the component reaching a desired temperature, the component is repaired via a direct energy deposition process.

In various embodiments, the induction coil is powered via an electrical current and wherein the electrical current is at least one of a direct electrical current or an alternating electrical current. In various embodiments, the induction coil is a single coil. In various embodiments, the induction coil is a set of coils.

In various embodiments, the component is a high temperature capable metallic alloy component. In various embodiments, an amount of the heat applied to the component is dependent on a type of metallic alloy of the high temperature capable metallic alloy component.

In various embodiments, the desired temperature is determined via a set of sensors monitoring a temperature of the component as the component is heated via the induction coil. In various embodiments, the component is moved into and out the induction coil via a motor. In various embodiments, the component is moved into and out an extruder of a direct energy deposition system via the motor. In various embodiments, the movement of the component is at least one of a rotational movement or a translational movement. Also disclosed herein is a system. The system includes a direct energy deposition device; an induction coil; a controller; and a tangible, non-transitory memory configured to communicate with the controller, the tangible, non-transitory memory having instructions stored thereon that, in response to execution by the controller, cause the controller to perform operations comprising: commanding the induction coil to apply a magnetic field to a component thereby causing a temperature of the component to increase; and, responsive to the component reaching a desired temperature, commanding the direct energy deposition device to repair the component.

In various embodiments, the induction coil is powered via an electrical current and wherein the electrical current is at least one of a direct electrical current or an alternating electrical current. In various embodiments, the induction coil is a single coil. In various embodiments, the induction coil is a set of coils.

In various embodiments, the component is a high temperature capable metallic alloy component. In various embodiments, an amount of the heat applied to the component is dependent on a type of metallic alloy of the high temperature capable metallic alloy component.

In various embodiments, the desired temperature is determined via a set of sensors monitoring a temperature of the component as the component is heated via the induction coil. In various embodiments, the component is moved into and out the induction coil via a motor. In various embodiments, the component is moved into and out an extruder of a direct energy deposition system via the motor. In various embodiments, the movement of the component is at least one of a rotational movement or a translational movement.

The present disclosure may include any one or more of the individual features disclosed above and/or below alone or in any combination thereof.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a perspective view of a directed energy deposition (DED) system configured to repair an aerospace component, in accordance with various embodiments.
FIG. 2 illustrates a cross-sectional view of an extruder for a manufacturing system, in accordance with various embodiments.
FIG. 3 illustrates a perspective view of a system to heat an aerospace component during direct energy deposition repair, in accordance with various embodiments
FIG. 4 illustrates a perspective view of a system to heat an aerospace component during direct energy deposition repair, in accordance with various embodiments.
FIG. 5 illustrates a flow diagram of a method for reducing or preventing damage to a component during repair of the component is illustrated in accordance with various embodiments

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination.

In aerospace, directed energy deposition (DED) utilizes guiding energy, which acts as a laser that focuses on a specific area where metal powders or wire feedstocks are heated up and deposited after melting. That is, typically, a small, localized area of the surface of the substrate is melted by the laser and powder or push wire is fed into the melt pool. However, certain high temperature capable metallic alloys used in aerospace that could be repaired using DED processing are known to crack during the DED processing. Accordingly, there is a need to control the processing temperature and environmental conditions during DED processing in order to prevent or reduce damage with certain high temperature capable metallic alloys during the DED processing.

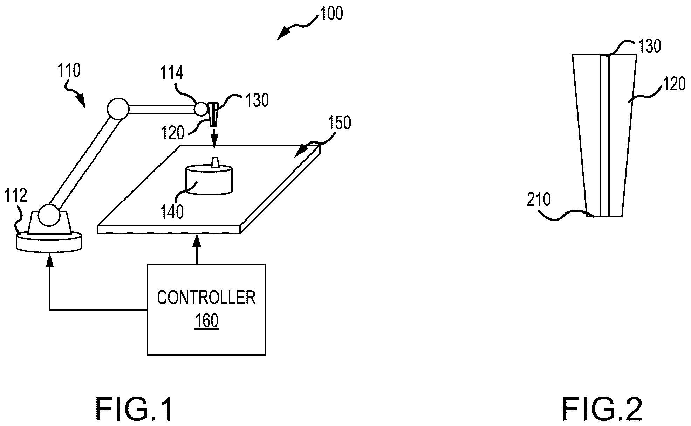

Disclosed herein is method and system to heat an aerospace component during direct energy deposition repair. In various embodiments, the heating is performed via induction heating. In various embodiments, local heating of the component using a conforming induction heating coil enables processing for repair via DED. In various embodiments, the heating of the substrate during DED processing allows metallic alloys with high temperature strength to be repaired with a reduced occurrence of presenting a defect, such as cracking. In various embodiments, a geometry of the feature being processed will dictate the geometry of the induction coil. In various embodiments, the geometry of the coil provides free rotation of an axisymmetric component during processing via DED. Referring now to FIG. 1, a perspective view of a directed energy deposition (DED) system 100 configured to repair an aerospace component is illustrated, in accordance with various embodiments. The DED system 100, which may also be referred to as a DED device, includes a 3-axis positioning system 110, a nozzle 120, a computer numerical control (CNC) controlled table 150, a laser 130, and a controller 160. In various embodiments, the nozzle 120 is co-axial with the laser 130 with the laser 130 in the center and powder delivery achieved via the nozzle 120 around the laser 130. In various embodiments, the 3-axis positioning system 110 extends from a fixed end 112 to a moveable end 114. The nozzle 120 and laser 130 are coupled to the moveable end 114 and configured to move with the moveable end 114. In various embodiments, the 3-axis positioning system 110 is in electrical or wireless communication with the controller 160, which is configured to control a position of the 3-axis positioning system 110 during DED processing. In various embodiments, a component under repair 140 may be affixed to the CNC controlled table 150 and positioned under the nozzle 120 and laser 130 under the control of controller 160.

In various embodiments, the nozzle 120 and the laser 130 are disposed at the distal end of the 3-axis positioning system 110. With reference now to FIG. 2, the nozzle 120 may comprise an annulus 210. In various embodiments, solid powder may be fed through the annulus 210 in the nozzle 120. In various embodiments, melting of the powder occurs when the powder arrives at the melt pool on the substrate that is created by the laser 130. In various embodiments, the powder may be introduced to the nozzle 120 from a hopper and is carried via a stream of gas to the melt pool. In various embodiments, solid wire may be fed through the annulus 210 in the nozzle 120. In various embodiments, melting of the wire occurs when the wire arrives at the melt pool on the substrate that is created by the laser 130. In various embodiments, the wire may be introduced to the nozzle 120 via a reel and fed to the melt pool. In various embodiments, feeding of the powder or the wire to the nozzle 120 is controlled by the controller 160 from FIG. 1. In various embodiments, the nozzle 120 described herein may be one of a plurality of nozzles with varying annulus diameters, so the nozzles of the DED system 100 from FIG. 2 may enable a higher deposition rate and/or an improved surface finish and feature resolution relative to typical additive manufacturing systems.

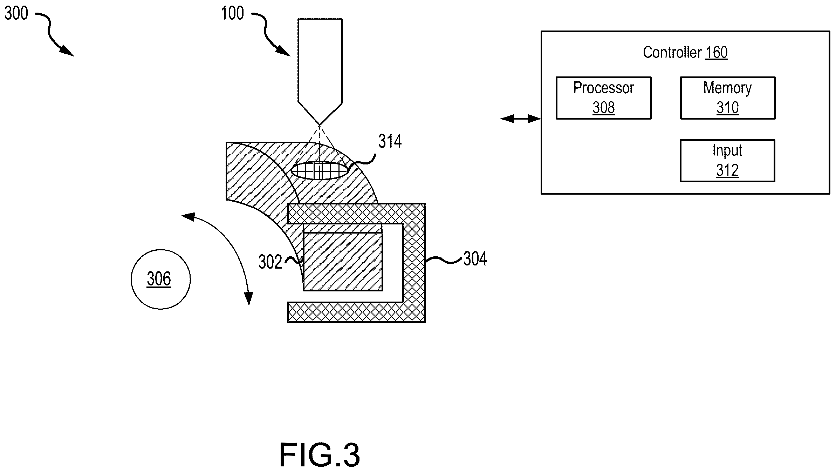

Referring now to FIG. 3, a perspective view of a system 300 to heat an aerospace component during direct energy deposition repair is illustrated, in accordance with various embodiments. In various embodiments, the component may have a cross-sectional geometry, such as square or round, among others, and may have a lengthwise geometry, such as straight or curved, among others, along a length of the component 302. With specific reference to component 302 of FIG. 3, the component 302 is shown to have a square cross-sectional geometry and to have a curved lengthwise geometry along the length of the component 302. In various embodiments, system 300 includes the DED system 100, an induction coil 304, a rotational motor 306, and a controller 160 that that is in communication with the DED system 100, the induction coil 304, and the rotational motor 306 and is configured to control the DED system 100, the induction coil 304, and the rotational motor 306.

In various embodiments, controller 160 may include one or more processors 308 configured to implement various logical operations in response to execution of instructions, for example, instructions stored on a non-transitory, tangible, computer-readable medium. The one or more processors can be a general-purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof.

Controller 160 may further include a memory 310 to store data, executable instructions, system program instructions, and/or controller instructions to implement the control logic of controller 160. Memory 310 may further store a database, a look up table, and/or other data objects for use by the executable instructions for implementing the control logic of controller 160. System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

Controller 160 may further include an input 312. In various embodiments, input 312 may be a bus or communication protocol with another device. In various embodiments, input 312 may be a touch screen, keyboard, and/or other input device located on the DED system 100, the induction coil 304, and the rotational motor 306. In various embodiments, input 312 may be a network connection for receiving inputs via a network connected device.

Controller 160 is configured to communicate with and control the DED system 100, the induction coil 304, and the rotational motor 306. Controller 160 may send instructions to the DED system 100, the induction coil 304, and the rotational motor 306 to control the working parameters of the DED system 100, the induction coil 304, and the rotational motor 306. In various embodiments, the instructions may be stored in memory 310 as a computer numerical control (CNC) program. The working parameters may include the RPM at which the component 302 is rotated, the direction in which the component 302 is rotated, the deposition speed of the material onto the component 302, and the electric current needed to heat the component 302 to a desired temperature. In various embodiments, the working parameters may be received via input 312. In various embodiments, the working parameters may be derived from input received via input 312. For example, input 312 may receive a type of metal of the component 302 and/or a thickness or diameter of the component 302, among other input information.

In various embodiments, controller 160 may use the input information to determine the working parameters to send to the DED system 100, the induction coil 304, and the rotational motor 306. In various embodiments, controller 160, and, more specifically, memory 310, may store a database of working parameters for different material types, thicknesses, and diameters. For example, controller 160 may send a first set of working parameters to the DED system 100, the induction coil 304, and the rotational motor 306 in response to the input indicating that the component 302 is formed from a first metallic alloy having a first thickness. As another example, controller 160 may send a second set of working parameters, with at least one parameter being different, to the DED system 100, the induction coil 304, and the rotational motor 306 in response to the input indicating that the thickness of the component 302 is a second thickness that is different than the first thickness.

By adjusting the working parameters (e.g., RPM, direction, deposition speed, electric current, etc.) for different materials and sized materials, controller 160, the DED system 100, the induction coil 304, and the rotational motor 306 may deposit material having different thicknesses to repair the component 302. Adjusting the working parameters of the DED system 100, the induction coil 304, and the rotational motor 306 by the controller 160 allows for a uniform and consistent workpiece. The component 302 is preheated by the induction coil 304 before deposition by the DED system 100 thereby reducing any damage that may be incurred by the deposition process. In various embodiments, the induction coil 304 may a magnetic field via an electrical current to heat the component 302, the electrical current being either an alternating electrical current or a direct electrical current. In that regard, in various embodiments, the induction coil 304 may have a geometry that resemble the features of the component 302. Accordingly, in various embodiments, if the component 302 has substantially a square geometry, then the induction coil 304 may have substantially square geometry. Accordingly, in various embodiments, if the component 302 has substantially a circular geometry, then the induction coil 304 may have substantially circular geometry. In various embodiments, the induction coil 304 may be configured to heat one or more sides of the component 302. In that regard, in various embodiments, the induction coil 304 may be configured to heat only two sides of the component 302, i.e. a top and bottom of the component 302. In various embodiments, the induction coil 304 may be configured to heat all four sides of the component 302.

With further regard to FIG. 3, in various embodiments, the controller 160 may receive a first input indicating a type of metallic alloy of a component 302 that is being repaired. Based on the identified type of metallic alloy, in various embodiments, the controller 160 may identify by accessing the memory 310 that the metallic alloy is a high temperature capable metallic alloy that requires heating to prevent or reduce damage to the component 302. In various embodiments, the controller 160 may then identify from the memory 310 the temperature required to heat the component 302 based on the identified metallic alloy to prevent or reduce damage to the component 302. In various embodiments, the component 302 may be coupled to the rotational motor 306 in various manners, such as being affixed to a table that is controlled by rotational motor 306 or affixed to a spoke-like element that is controlled by rotational motor 306, among others. Once the controller 160 identifies the temperature, in various embodiments, the controller 160 may be configured to send a command to the rotational motor 306 to rotate the component 302 in one or more directions and at a specific speed into and out the induction coil 304 as well as send a command to the induction coil 304 to apply a magnetic field sufficient to increase a temperature of a repair area 314 of the component 302. In various embodiments, the controller 160 may monitor one or more sensors, such as an infrared sensor, to monitor the temperature of the component 302. In various embodiments, once the component 302 is heated to the required temperature as identified by the one or more sensors, the controller 160 may send a command to the rotational motor 306 to rotate the component 302 in one or more directions and at a specific speed to the DED system 100 and send a command to the DED system 100 to repair the repair area 314 of the component 302. During the repair process, in various embodiments, the controller 160 may continue to monitor the temperature of the repair area 314 of the component 302 and rotate the component between the induction coil 304 and the DED system 100 in order that the induction coil 304 maintains the desired temperature of the component 302 so as prevent or reduce damage of the component 302 until the repair is made to the component 302 by the DED system 100.

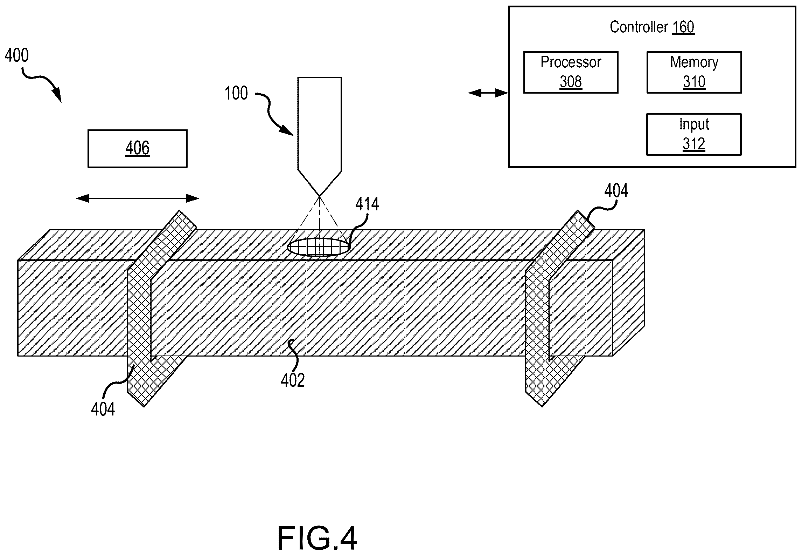

Referring now to FIG. 4, a perspective view of a system 400 to heat an aerospace component during direct energy deposition repair is illustrated, in accordance with various embodiments. FIG. 4 is similar to FIG. 3 with the exception of the table motor of FIG. 3 being a rotational motor and the table motor of FIG. 4 being a translational motor. Therefore, elements in FIG. 4 not specifically described in FIG. 4 operate in a similar manner to the elements described in FIG. 3. With specific reference to component 402 of FIG. 4, the component 402 is shown to have a square cross-sectional geometry and to have a straight lengthwise geometry along the length of the component 402. In various embodiments, system 400 includes the DED system 100, an induction coil 404, a translational motor 406, and a controller 160 that that is in communication with the DED system 100, the induction coil 404, and the translational motor 406 and is configured to control the DED system 100, the induction coil 404, and the translational motor 406. Controller 160 may further include an input 312. In various embodiments, input 312 may be a bus or communication protocol with another device. In various embodiments, input 312 may be a touch screen, keyboard, and/or other input device located on the DED system 100, the induction coil 404, and the translational motor 406. In various embodiments, input 312 may be a network connection for receiving inputs via a network connected device.

Controller 160 is configured to communicate with and control the DED system 100, the induction coil 404, and the translational motor 406. Controller 160 may send instructions to the DED system 100, the induction coil 404, and the translational motor 406 to control the working parameters of the DED system 100, the induction coil 404, and the translational motor 406. In various embodiments, the instructions may be stored in memory 310 as a computer numerical control (CNC) program. The working parameters may include the RPM at which the component 402 is translated, the direction in which the component 402 is translated, the deposition speed of the material onto the component 402, and the electric current needed to heat the component 402 to a desired heat. In various embodiments, the working parameters may be received via input 312. In various embodiments, the working parameters may be derived from input received via input 312. For example, input 312 may receive a type of metal of the component 402 and/or a thickness or diameter of the component 402, among other input information.

In various embodiments, controller 160 may use the input information to determine the working parameters to send to the DED system 100, the induction coil 404, and the translational motor 406. In various embodiments, controller 160, and, more specifically, memory 310, may store a database of working parameters for different material types, thicknesses, and diameters. For example, controller 160 may send a first set of working parameters to the DED system 100, the induction coil 404, and the translational motor 406 in response to the input indicating that the component 402 is formed from a first metallic alloy having a first thickness. As another example, controller 160 may send a second set of working parameters, with at least one parameter being different, to the DED system 100, the induction coil 404, and the translational motor 406 in response to the input indicating that the thickness of the component 402 is a second thickness that is different than the first thickness.

By adjusting the working parameters (e.g., RPM, direction, deposition speed, electric current, etc.) for different materials and sized materials, controller 160, the DED system 100, the induction coil 404, and the translational motor 406 may deposit material having different thicknesses to repair the component 402. Adjusting the working parameters of the DED system 100, the induction coil 404, and the translational motor 406 by the controller 160 allows for a uniform and consistent workpiece. The component 402 is preheated by the induction coil 404 before deposition by the DED system 100 thereby reducing any damage that may be incurred by the deposition process. In various embodiments, the induction coil 404 may apply a magnetic field via an electrical current to heat the component 402, the electrical current being either an alternating electrical current or a direct electrical current. In that regard, in various embodiments, the induction coil 404 may have a geometry that resemble the features of the component 402. Accordingly, in various embodiments, if the component 402 has substantially a square geometry, then the induction coil 404 may have substantially square geometry. Accordingly, in various embodiments, if the component 402 has substantially a circular geometry, then the induction coil 404 may have substantially circular geometry. In various embodiments, the induction coil 404 may be configured to heat one or more sides of the component 402. In that regard, in various embodiments, the induction coil 404 may be configured to heat only two sides of the component 402, i.e. a top and bottom of the component 402. In various embodiments, the induction coil 404 may be configured to heat all four sides of the component 402.

With further regard to FIG. 4, in various embodiments, the controller 160 may receive a first input indicating a type of metallic alloy of a component 402 that is being repaired. Based on the identified type of metallic alloy, in various embodiments, the controller 160 may identify by accessing the memory 310 that the metallic alloy is a high temperature capable metallic alloy that requires heating to prevent or reduce damage to the component 402. In various embodiments, the controller 160 may then identify from the memory 310 the temperature required to heat the component 402 based on the identified metallic alloy to prevent or reduce damage to the component 402. In various embodiments, the component 402 may be coupled to the translational motor 406 in various manners, such as being affixed to a table that is controlled by translational motor 406 or affixed to a spoke-like element that is controlled by rotational motor 306, among others. Once the controller 160 identifies the temperature, in various embodiments, the controller 160 may be configured to send a command to the translational motor 406 to translate the component 402 in one or more directions and at a specific speed into and out the induction coil 404 as well as send a command to the induction coil 404 to apply a magnetic field sufficient to increase a temperature of a repair area 414 of the component 402. It is noted that in difference to FIG. 3, the induction coil 404 in FIG. 4 is a set of induction coils so that the component 402 may be heated in either direction. In various embodiments, the controller 160 may monitored one or more sensors, such as an infrared sensor, to monitor the temperature of the component 402. In various embodiments, once the component 402 is heated to the required temperature as identified by the one or more sensors, the controller 160 may send a command to the translational motor 406 to translate the component 402 in one or more directions and at a specific speed to the DED system 100 and send a command to the DED system 100 to repair the repair area 414 of the component 402. During the repair process, in various embodiments, the controller 160 may continue to monitor the temperature of the repair area 414 of the component 402 and translate the component between the induction coil 404 and the DED system 100 in order that the induction coil 404 maintains the desired temperature of the component 402 so as prevent or reduce damage of the component 402 until the repair is made to the component 402 by the DED system 100.

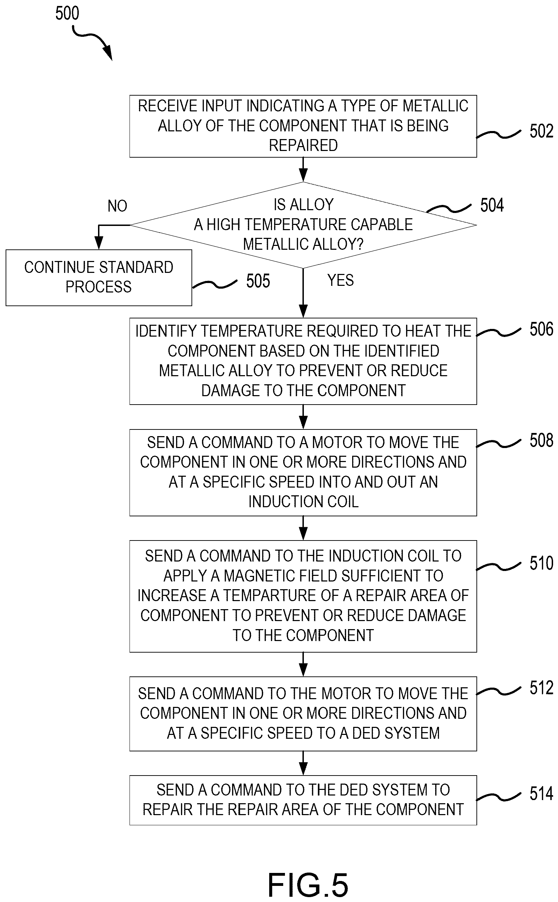

Referring now to FIG. 5, a flow diagram of a method 500 for reducing or preventing damage to a component during repair of the component is illustrated in accordance with various embodiments. At block 502, a controller, such as controller 160 of FIGS. 1, 3, and 4, receives input indicating a type of metallic alloy of the component that is being repaired. At block 504, the controller determines whether the alloy is a high temperature capable alloy that requires heating to prevent or reduce damage to the component. If at block 504 the controller determines that the allow is not a high temperature capable alloy, then at block 505 the operation continues the standard process without the use of induction heating.

If at block 504 the controller determines that the allow is a high temperature capable alloy, then at block 506 the controller identifies a temperature required to heat the component based on the identified alloy to prevent or reduce damage to the component. At block 508, the controller sends a command to a motor to move the component in one or more directions and at a specific speed into and out an induction coil. At block 510, the controller sends a command to the induction coil to apply a magnetic field sufficient to increase a temperature of a repair area of component to prevent or reduce damage to the component. At block 512, once the component is heated to the required temperature, as identified by one or more sensors, the controller send a command to the motor to move the component in one or more directions and at a specific speed to a DED system. At block 514, the controller sends a command to the DED system to repair the repair area of the component.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is intended to invoke 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for repairing a component without further damaging the component, comprising:
applying a magnetic field to the component via an induction coil thereby causing a temperature of the component to increase; and
responsive to the component reaching a desired temperature, repairing the component via a direct energy deposition process.

2. The method of claim 1, wherein the induction coil is powered via an electrical current and wherein the electrical current is at least one of a direct electrical current or an alternating electrical current.

3. The method of claim 1 or 2,
wherein the induction coil is a single coil, and/or
wherein the induction coil is a set of coils.

4. The method of claim 1, 2 or 3, wherein the component is a high temperature capable metallic alloy component.

5. The method of claim 4, wherein an amount of the heat applied to the component is dependent on a type of metallic alloy of the high temperature capable metallic alloy component.

6. The method of any preceding claim, wherein the desired temperature is determined via a set of sensors monitoring a temperature of the component as the component is heated via the induction coil.

7. The method of any preceding claim, wherein the component is moved into and out the induction coil via a motor.

8. The method of claim 7, wherein the component is moved into and out an extruder of a direct energy deposition system via the motor.

9. The method of claim 8, wherein the movement of the component is at least one of a rotational movement or a translational movement.

10. A system, comprising:
a direct energy deposition device;
an induction coil;
a controller; and
a tangible, non-transitory memory configured to communicate with the controller, the tangible, non-transitory memory having instructions stored thereon that, in response to execution by the controller, cause the controller to perform operations comprising:
commanding the induction coil to apply a magnetic field to a component thereby causing a temperature of the component to increase; and
responsive to the component reaching a desired temperature, commanding the direct energy deposition device to repair the component.

11. The system of claim 10, wherein the induction coil is powered via an electrical current and wherein the electrical current is at least one of a direct electrical current or an alternating electrical current, and/or
wherein the induction coil is a single coil, and/or
wherein the induction coil is a set of coils.

12. The system of claim 10 or 11, wherein the component is a high temperature capable metallic alloy component.

13. The system of any of claims 10 to 12, wherein the controller controls an amount of the heat applied to the component dependent on a type of metallic alloy of the high temperature capable metallic alloy component.

14. The system of any of claims 10 to 13 , wherein the system further comprises:
a set of sensors, wherein the desired temperature is determined via the set of sensors monitoring a temperature of the component as the component is heated via the induction coil.

15. The system of any of claims 10 to 14, wherein the system further comprises:
a motor, wherein the motor moves the component is moved into and out of the induction coil,
wherein, optionally, the motor moves the component into and out an extruder of a direct energy deposition system,
wherein, optionally, the movement of the component is at least one of a rotational movement or a translational movement.
